Europäisches Patentamt

**European Patent Office**

Office européen des brevets

(11) Numéro de publication: **0 109 318**
A2

## (12) DEMANDE DE BREVET EUROPEEN

(21) Numéro de dépôt: 83401940.8

(22) Date de dépôt: 04.10.83

(51) Int. Cl.³: **A 23 L 1/10,** A 23 L 1/20,
**A 23 L** 1/164, A 21 D 13/08

(30) Priorité: 15.11.82 US 441475

(43) Date de publication de la demande: 23.05.84
**Bulletin 84/21**

(84) Etats contractants désignés: **AT BE CH DE FR GB IT LI
LU NL SE**

(71) Demandeur: **NABISCO BRANDS, INC., Nabisco Brands Plaza, Parsippany New Jersey 07054 (US)**

(72) Inventeur: **Spiel, Albert, 98 Dehaven Drive, Yonkers New York 10703 (US)**
Inventeur: **Knipper, Aloysius, 227 Cupsaw Drive, Ringwood New Jersey 07456 (US)**

(74) Mandataire: **Bonnetat, Christian et al, Cabinet PROPI Conseils 23 rue de Léningrad, F-75008 Paris (FR)**

(54) Procédé de fabrication de produits à base de céréales sous forme de brins, et produit obtenu au moyen de ce procédé.

(57) Suivant ce procédé, (a) on fait cuire des particules d'avoine, ou de gruau d'avoine, éventuellement additionnés de grains d'autres céréales, sous pression en au moins deux phases, la quantité d'eau dans chaque phase étant limitée afin d'éviter une extraction notable des gommes et des amidons solubles dans l'eau vers la surface des particules d'avoine, (b) on refroidit et on sèche superficiellement les particules d'avoine cuites afin de produire des particules discrètes d'avoine libres de s'écouler individuellement, (c) on forme les particules d'avoine refroidies séchées superficiellement en brins, la quantité d'eau ajoutée dans la première phase de cuisson étant limitée pour obtenir une teneur en humidité des particules d'avoine comprise dans une plage d'environ 15% à 25% en poids, la quantité d'eau ajoutée dans la seconde phase de la cuisson sous pression étant limitée pour obtenir une teneur en humidité comprise dans une plage d'environ 40% à environ 50% en poids, on dépose les brins en couches pour les couper et former des biscuits qui sont ensuite cuits.

Procédé de fabrication de produits à base de céréales sous forme de brins, et produit obtenu au moyen de ce procédé.

La présente invention est relative à la fabrication de produits à base de céréales prêts à consommer, sous forme de brins, et à des produits à base de céréales sous forme de brins, ou de groupes de brins.

Le terme "brins" utilisé dans la présente description doit être entendu comme désignant des morceaux minces allongés soit isolés soit en groupes, parallèles juxtaposés et solidaires et formant de petites feuilles qui constituent une présentation classique des produits communément désignés d'une façon générale par le terme "céréales" et dont la consommation au déjeuner matinal est très répandue; ces produits pouvant être à base de blé, d'avoine, de riz ou de toute autre céréale.

On connait différents procédés pour la fabrication des produits à base de céréales prêts à consommer pour le petit déjeuner et qui sont présentés sous forme de brins. L'imprégnation des grains cuits avant de former les brins a été considérée comme nécessaire pour obtenir des brins continus résistants. Suivant les brevets U.S.n° 4.548.086 et 1.159.045, du blé cuit ou des grains similaires sont soumis à des temps d'imprégnation excèdant 12 heures avant la formation des brins. Comme décrit dans le brevet U.S. n° 4.179.527, dans la fabrication d'un produit alimentaire à base de blé complet tel que des brins de blé, le blé complet est cuit de façon suffisante pour gélatiniser l'amidon.

La gélatinisation est fonction de la pénétration de l'eau dans l'ensemble du grain, de la température et du temps pour un type donné de grain. Suivant le brevet U.S. n° 4.179.527, la gélatinisation del'amidon du blé entraine une destruction des liaisons dans les régions cristallines des granules d'amidon. La rétrogradation est le retour des molécules d'amidon à une structure cristalline, qui est différente de la structure cristalline initiale, à la suite d'un refroidissement. L'imprégnation permet à l'amidon de blé gélatinisé de refroidir lentement et permet la migration de l'eau à travers les particules de blé afin d'obtenir une répartition uniforme de l'eau dans les particules. La rétrogradation se produit pendant l'imprégnation. Comme on l'a relaté dans le brevet U.S. n°4.179.527, si on tente de former des brins peu de temps après la cuisson, le degré insuffisant de rétrogradation ou d'imprégnation a au mieux pour résultat des brins ou filaments courts et discontinus et/ou des brins ou filaments qui sont résistants, ondulés ou encore présentent d'autres inconvénients physiques ou de texture. Dans le brevet U.S.n°4.179.527, le temps nécessaire pour l'imprégnation du blé complet cuit est notablement réduit par refroidissement du blé à une température de 1°C à environ 12°C.

Des procédés dans lesquels l'imprégnation n'est pas mentionnée précisémment ou est seulement indiquée comme facultative dans la fabrication de produits à base de céréales à partir de blé ou autres grains, sont décrits dans les brevets U.S. n°1.189.130, 1.210.589, 2.008.024, 1.946.803 et 502.378. Dans le brevet U.S.n° 1.189.130 on mélange du son tel que du son de blé avec jusqu'à 50% de blé complet ou autre farine de céréale gélatineuse, et le mélange est cuit dans des récipients à la vapeur en vase clos. Le produit cuit est séché pour former des blocs et les blocs sont ensuite amenés dans des appareils pour former des brins. Dans le brevet U.S.n° 1.210.589, on réalise un produit composite à base de céréales en mélangeant du son, du blé rapé et du sirop, on moule le mélange et ensuite on le fait cuire. Dans le brevet U.S. n° 2.008.024, on prépare un biscuit à base de céréales en faisant cuire du blé à la vapeur ou par ébullition, on sèche superficiellement le produit cuit, et on le convertit ensuite en une mince feuille à nervures. Des cylindres de laminage sont suffisamment espacés l'un de l'autre de manière à obtenir une matière en feuilles comportant des nervures, au lieu d'un produit sous forme de brins. Dans le brevet U.S. n° 1.946.803 on fait cuire à la vapeur du riz seul ou en combinaison avec du son, on le fait sécher et on le refroidit jusqu'à obtenir une consistence caoutchouteuse, et on le garde, si on le désire, pour une imprègnation afin d'assurer une répartition uniforme de l'eau. On fait ensuite passer ce produit entre des cylindres à gorges afin de former de longs rubans plats. Ces rubans sont sèchés afin d'obtenir un produit fragile qui est brisé et est ensuite gonflé en le faisant griller. Dans le brevet U.S. n° 502.378, on prépare un grain de céréale pour former des brins en le faisant bouillir, en le traitant à la vapeur, en le mouillant ou en le trempant. En fonction de l'écartement entre les cylindres, on obtient un produit sous la forme de fils, de filaments, de rubans, de feuilles ou autres.

Des procédés de fabrication d'avoine sous forme de brins, dans lesquels on utilise une imprègnation considèrable, comme dans le procèdé classique de fabrication du blé sous forme de brins, sont décrits dans les brevets U.S. n° 1.170.162, 1.197.297 et 4.004.035. L'imprègnation d'avoine cuite est également décrite dans le brevet U.S. n° 3.733.206. Cependant, dans le procédé faisant l'objet de ce dernier brevet, les biscuits contiennent des flocons de céréales tassés, par opposition à des brins. Dans les brevets U.S. n° 1.170.162 et 1.197.297, le grain complet est pulvérisé afin de permettre d'incorporer un assaisonnement au produit final. On forme une pâte avec de la farine, de l'assaisonnement et de l'eau. On fait ensuite cuire la pâte, on la roule en pains et on la fait ensuite sécher à l'atmosphère pendant une durée de 24 à 40 heures. Le produit sèché est grillé, brisé en morceaux de la dimension d'un pois et formé en brins. Dans le brevet US 4.004.035, on indique que lors de la fabrication en continu de biscuits sous forme de brins en utilisant un dispositif de coupe du type presse ou du type rotatif par contact pour sectionner la bande transversalement aux brins, la résistance à la traction et la nature collante de la matière sous forme de brins limite la capacité de ces dispositifs de coupe à travailler de façon satisfaisante. Il est indiqué que la matière sous forme de brins tend à adhérer à la lame ou encore que celle-ci ne la coupe pas complètement. Dans le brevet U.S. n° 4.004.035, les biscuits sous forme de brins sont formés en déposant une couche de produit à base de céréale sous forme de brins, en zig-zag sur une courroie en mouvement et on sectionne ensuite la matière. Cependant, une imprégnation pendant un temps considérable comme dans ces procédés est indésirable du point de vue des frais d'appareillage, du rendement de l'installation, et de la croissance microbienne excessive. On a deplus trouvé que lorsque des gruaux d'avoine complet cuits sont imprégnés avant la formation des brins, la facilité de formation de ces brins diminue. L'effet nuisible des temps prolongés d'imprégnation sur l'aptitude de l'avoine à former des brins est inattendu, eu égards à la nécessité d'imprègner le blé, enseignée par la technique antérieure pour permettre de le former en brins.

Les brevets U.S. n° 897.181, 3.062.657, 3.462.277, 3.732.109, et le brevet Canadien n° 674.046 décrivent des procédés de fabrication de produits à base de céréales à partir d'avoine sans aucune phase apparente d'imprégnation. Dans le brevet U.S. n° 897.181,les avoines sont mouillées mais non pas cuites et passent ensuite répétitivement entre des cylindres à gorges et sont ensuite cuites. Il est décrit que la cuisson du grain par ébullition ou passage à la vapeur produit des changements considérables dans la qualité chimique du grain et un certain nombre d'éléments nutritifs solubles s'échappent du grain dans l'eau. Dans les procédés des autres brevets, on ne fabrique pas un produit sous forme de brins au moyen de cylindres de laminage. Suivant le brevet U.S. n° 3.062.657 on mélange de la farine et de l'eau pour former une pâte dans une extrudeuse. La pâte est cuite dans l'extrudeuse et elle est ensuite imprégnée dans cette extrudeuse sous une faible température. Les extrudats sont coupés en boulettes pour simuler des grains cuits et séchés tels que du gruau de maïs, des grains de blé complet, du gruau d'avoine, de riz et analogue. Il est indiqué que les extrudats ont une teneur en humidité qui est idéale pour former des flocons. Cette teneur en humidité est habituellement de l'ordre de 18 à 24% en poids, l'humidité étant uniformément répartie dans toute la masse de sorte que la nécessité d'une imprégnation est entièrement supprimée et que l'extrudat peut être immédiatement transféré à un poste de formation de flocons. Il est décrit qu'il est préférable de refroidir encore l'extrudat avant qu'il pénètre dans le dispositif pour former des flocons afin d'optimaliser l'aptitude à la formation de flocons.

Suivant le brevet U.S. n° 3.462.277 on fait passer un mélange de farine et d'eau à travers une extrudeuse pour gélatiniser l'amidon tandis que la pâte est cuite et transformée en une masse analogue à du caoutchouc. La teneur en humidité du mélange est de 13 à 35%. L'extrudat continu de section en forme de U est divisé par pincement en segments par des cylindres de coupe afin de former des morceaux de céréales en forme de pirogues. Les morceaux séparés en forme de pirogues sont ensuite séchés jusqu'à un taux d'humidité inférieur à 15%.

Le brevet U.S. n° 3.732.109 décrit la fabrication d'un biscuit de céréale prêt à consommer, à base d'avoine, en soumettant un mélange de farine d'avoine et d'eau à la température d'ébullition de l'eau et à une pression supérieure à la pression atmosphérique afin de gélatiniser une partie de l'amidon présent dans la farine d'avoine. On fait ensuite passer le mélange à travers un orifice et le produit extrudé est coupé en petits morceaux. Les morceaux en forme de flocons qui sont formés sont séchés jusqu'à obtenir une teneur en humidité d'environ 2% à environ 6% en poids d'eau. Les flocons séchés sont ensuite subdivisés,mélangés avec un sirop et tassés en forme de biscuits. Les biscuits ainsi formés sont ensuite séchés jusqu'à présenter une teneur en humidité d'environ 4 à 5% en poids.

Suivant le brevet Canadien N° 674.046 on fabrique un produit sec à base d'avoine sous forme de brins sans utiliser de cylindres de laminage. On fait cuire une pâte dans une extrudeuse à vis, on extrude la pâte à travers des orifices pour former un faisceau de brins ou de filaments, et ce faisceau est coupé en morceaux par un dispositif de coupe qui peut être constitué par une paire de cylindres.

Dans la fabrication d'avoine en brins au moyen de cylindres de laminage, l'obtention de l'avoine cuite sous une forme qui permette de produire des brins continus est seulement l'un de plusieurs problèmes que l'on rencontre. Lorsque des avoines sont cuites à l'atmosphère dans de l'eau on obtient un produit du type bouillie d'avoine qui colle excessivement aux appareillages de manutention tels que les courroies transporteuses et les trémies, ainsi que sur les cylindres de laminage. Le séchage du produit cuit avant la formation des brins ne résoud pas ce problème. On éprouve cette nature gluante lors du transport vers le séchoir.De plus, lorsque la cuisson à l'eau est limitée dans le temps afin de réduire la nature collante, les brins produits à partir de l'avoine comportent des rayures blanches.

Le gruau d'avoine, ainsi que la farine d'avoine, contient de la gomme d'avoine. Cette gomme, comme cela est exposé par T. Shukla dans un article intitulé: Chemistry of Oats: Protein Foods and Other Industrial Products", publié par la revue: Critical Reviews in Foods Science and Nutrition, pages 383-424 (octobre 1975), est soluble dans l'eau à la température ambiante et on pense que cette gomme est responsable de la nature gélatineuse de la bouillie d'avoine. La cuisson des gruaux d'avoine dans l'eau à la pression atmosphérique a pour résultat une extraction excessive des gommes de l'intérieur du gruau d'avoine vers la surface. La présence des gommes d'avoine à la surface gêne la pénétration de l'eau dans le gruau d'avoine pour la gélatinisation de l'amidon.

De plus, des rayures blanches sont également produites par une cuisson excessive du gruau d'avoine. On pense qu'un excès de cuisson a pour résultat soit un éclatement des granules d'amidon qui expose la matière blanche, soit l'apparition d'un produit de réaction qui est blanc. On a également trouvé que la cuisson du gruau d'avoine sous pression au moyen de vapeur afin d'assurer une teneur en humidité du gruau cuit qui soit suffisamment élevée pour obtenir un produit pouvant être formé en brins a également pour résultat l'apparition de rayures blanches.

Le brevet U.S. N° 2.421.216 indique que l'on procède à une cuisson pour supprimer les centres blancs dans les grains. Des particules de grains de céréales telles que du maïs, du seigle, du blé, du son, du riz ou des gruaux d'avoine sont mélangées avec des particules de graines de soja dégraissées sous la forme de gruaux, de flocons ou de farine afin de renforcer la teneur en proteines du produit en utilisant une opération de cuisson sous pression en deux phases.

Le grain de céréale est tout d'abord cuit avec une solution d'assaisonnement dans un appareil rotatif de cuisson à la vapeur. On maintient dans l'appareil de cuisson une pression de vapeur d'environ 104,4 kPa à environ 187,9 kPa. Des moyens sont prévus pour l'admission et l'évacuation de la vapeur, afin de permettre d'effectuer la cuisson à une température dans une plage d'environ 121 à 127°C. La solution d'assaisonnement est une solution aqueuse contenant environ 8% de sucre, 3,5% de sel, et un faible pourcentage d'extraits de malt. La quantité de solution d'assaisonnement est ajoutée aux particules de grains de céréales en proportion de la teneur initiale en humidité du grain de céréale. Cette solution est ajoutée en une quantité telle que la teneur en humidité des particules à la sortie de l'appareil de cuisson est comprise dans une plage d'environ 30 à 45%. Le soja dégraissé est imprégné séparément avec environ une partie en poids de solution d'assaisonnement pour environ 3 parties en poids de particules de graines de soja dégraissées, de sorte que la totalité de la solution est absorbée par les particules de soja dégraissées. La cuisson du produit est interrompue pour l'addition du soja imprégné. Le produit et le soja imprégné sont ensuite cuits à peu près dans les mêmes conditions de pression de vapeur auxquelles le produit a été soumis pendant la période de cuisson initiale.

Suivant le brevet U.S. N° 2.421.216 la période totale de cuisson à laquelle le composant céréale est soumis doit être telle que les amidons soient hydrolysés et dextrinisés à un degré élevé et les particules gélatinisées superficiellement sans amidon libre ou centre blanc. Il est indiqué que les particules de céréale doivent également avoir une légère action adhésive sur les particules de graines de soja ajoutées de façon intermédiaire. La masse mélangée de céréale et de soja qui est retirée de l'appareil de cuisson présente une teneur en humidité comprise dans une plage d'environ 30 à 45%. Cette masse est ensuite séchée jusqu'à présenter une teneur en humidité comprise dans une plage d'environ 24 à 32% en utilisant de l'air à 54°C. La masse séchée est ensuite imprégnée pendant environ 15 à 30 minutes avant la formation de brins dans un laminoir dans lequel les particules de soja se trouvent répandues à peu près uniformément sur les particules de céréales, et mélangées et collées à celles-ci par pression en traversant les cylindres de laminage. Le produit sous forme de brins est coupé au moyen d'un couteau rotatif, séché sur un séchoir rotatif jusqu'à obtenir une teneur en humidité d'environ 20 à 28%, il est séché dans un four jusqu'à présenter une teneur en humidité d'environ 7 à 15%, et il est grillé jusqu'à présenter une teneur en humidité d'environ 2,5%. On utilise depuis environ 15% jusqu'à autant qu'environ 40% de particules de graines de soja dégraissées, sur la base du poids de graines de soja et de céréale .

Suivant le brevet U.S. N° 2.421.216, le soja doit être dégraissé afin de permettre un traitement approprié ou une bonne formation de brins dans les appareils de traitement. On pense que le soja dégraissé qui adhère aux particules de céréales fournit de la résistance au produit sous forme de brins, permettant ainsi une formation continue de ces brins. Dans le cas de gruaux d'avoine, dans l'exemple V, les gruaux sont tout d'abord imprégnés, traités à la vapeur et par chocs ou déformés avant de les faire cuire dans l'appareil de cuisson sous pression. Ce pré-traitement augmenterait la nature collante de la surface qui est désirée pour l'adhérence des particules de soja sur les particules d'avoine. On pense que les particules de soja, en adhérant aux particules de céréales lient les gommes collantes et les amidons sur la céréale, diminuant ainsi l'adhérence des particules de céréales à l'appareillage de manutention.

La cuisson en deux phases des grains de céréales est également décrite dans les brevets U.S. N° 3.512.990 et 3.787.584. Dans le procédé du premier de ces brevets, la pâte faite à partir de matières farineuses telles que du blé, du maïs, de l'avoine, du riz, des pommes de terre, ou des légumes est au choix partiellement ou complètement cuite avec adjonction d'humidité, jusqu'à présenter une teneur approximative en humidité d'environ 30%. Après cette phase de cuisson le mélange est rendu homogène en le faisant par exemple passer à travers une extrudeuse. Le produit extrudé est séché jusqu'à présenter une teneur approximati- en humidité de 22 à 24%. La pâte séchée est ensuite tassée entre deux cylindres pour produire un effet de formation de brins et produire une feuille de pâte ayant des perforations en losange régulièrement espacées. La feuille de pâte est ensuite segmentée en bandes, pliée pour former de petits biscuits qui sont fermés sur trois côtés et qui sont ensuite frits.

Suivant le brevet U.S. N° 3.787.584 un produit alimentaire à base de gruaux de maïs, du type instantané, dépourvu d'émulsif, est fabriqué en chauffant un mélange de gruaux de maïs, et de gomme polysaccharide dans une plage de températures critiques pendant une durée critique. Le mélange chauffé est ensuite chauffé au cours d'une seconde phase de chauffage qui consiste en une plage de températures critiques. Le mélange est séché sous la forme d'une mince feuille sur un tambour sécheur et la feuille séchée et cuite est alors pulvérisée. La première phase de chauffage est conduite à une température de 60 à 80°C de sorte que l'amidon ne durcisse pas ou ne gélatinise à peu près pas. Dans la seconde phase de chauffage, le mélange est chauffé jusqu'à une température de 90 à 100°C. Le mélange chauffé est séché dans deux minutes du temps d'exécution de la seconde phase de chauffage. Il est indiqué que les gommes polysaccharides sont également utilisées dans la fabrication de bouillies d'avoine instantanées.

Dans les brevets U.S. N° 987.088, 1.019.831 et 1.021.473, du maïs ou autre grain est moulu et plongé dans une quantité d'eau qui est limitée à celle qui sera absorbée par le grain pendant la cuisson. Le but de ceci est de préserver dans le produit cuit l'arome et les autres propriétés du grain qui pourraient autrement être évacuées ou dissipées par le dégagement de vapeurs. Dans ces procédés la pâte cuite est extrudée à travers une plaque perforée afin d'obtenir des filaments. Cependant, dans la fabrication d'avoine sous forme de filaments, si la teneur en humidité de l'avoine est trop faible, soit en raison d'une cuisson dans une quantité d'eau insuffisante soit en raison d'un séchage après la phase de cuisson, on ne peut pas obtenir une production uniforme de brins continus sur des cylindres de laminage.

La présente invention fournit un procédé de fabrication d'une "céréale" à base d'avoine, sous forme de brins, fait à partir d'un gruau d'avoine complete, seul ou en combinaison avec d'autres grains de céréales, qui présente l'aspect de brins et la texture de blé complet sous forme de brins. Les avoines cuites et refroidies sont sous la forme de particules discrètes, individuelles ou non reliées entre-elles, qui ont une bonne capacité d'écoulement dans l'appareillage de manutention, ne produisent pas "d'effet de voute" lorsqu'elles s'écoulent dans des trémies, qui peuvent être facilement mises sous forme de brins robustes continus sur une base continue en utilisant des cylindres de laminage, et le produit cuit est dépourvu de bandes blanches ou de points blancs. Le procédé peut être conduit en continu sans phase d'imprégnation, ce qui réduit les frais de mise en oeuvre et d'appareillage. De plus, l'appareillage de manutention, de mise sous forme de brins et de cuisson habituellement utilisé dans la fabrication du blé sous forme de brins peut être utilisé pour lamise en oeuvre du procédé suivant l'invention. En conséquence les installations existantes pour la fabrication de blé complet en brins peuvent être facilement adaptées à la fabrication d'avoine en brins sans modification notable de l'appareillage.

La présente invention est relative à un procédé pour la fabrication de produits alimentaires à base d'avoine sous forme de brins, tels que des produits à base de céréales, prêts à consommer, pour le petit déjeuner, ayant l'aspect et la texture du blé complet sous forme de brins. Les rayures ou les points blancs dans le produit final, qui résultent d'un défaut de cuisson ou d'une cuisson excessive du grain sont supprimés par la cuisson sous pression de l'avoine en au moins deux phases, la quantité d'eau utilisée dans la première phase de cuisson sous pression étant limitée de façon à gélatiniser partiellement l'amidon sans extraction notable des amidons et des gommes solubles dans l'eau vers la surface des particules d'avoine. La quantité d'eau utilisée dans la phase ou dans les phases restantes de cuisson sous pression doit être suffisante pour supprimer au moins à peu près toutes les parties blanches dans les particules d'avoine et pour assurer une teneur en eau des particules d'avoine qui soit suffisamment élevée pour permettre la formation continue de brins sur des cylindres de laminage. De plus, la quantité d'eau dans chacune des phases restantes doit être limitée afin d'éviter une extraction notable des gommes et des amidons solubles dans l'eau vers la surface des particules d'avoine partiellement cuites.

L'opération de cuisson sous pression en plusieurs phases est suivie par une opération de refroidissement qui arrête toute nouvelle cuisson, deshydrate partiellement le grain cuit et produit sur ceux-ci une surface non poisseuse. La surface non poisseuse permet un passage des particules d'avoine cuite non reliées entre-elles dans l'appareillage de manutention tel que les transporteurs à vis, les conduites d'écoulement et les trémies. Aucune imprègnation de l'avoine cuite n'est nécéssaire avant la formation des brins. En conséquence, le procèdé peut être mis en oeuvre d'une façon continue sans qu'il soit nécéssaire d'utiliser plusieurs récipients d'imprègnation. Le produit refroidi et sèché en surface est mis sous forme de brins en utilisant des cylindres de laminage, et il est cuit dans l'appareillage classique utilisé pour la fabrication du blé complet en brins. Des gruaux d'avoine complète sont la forme prèférée de particules d'avoine utilisées dans l'opèration de cuisson sous pression en plusieurs phases suivant la présente invention. Des"céréales" en brins faites à partir de mélanges d'avoines avec d'autres grains peuvent être fabriquées suivant le procèdé de l'invention en mélangeant de l'avoine refroidie sèchée superficiellement avec au moins un autre grain cuit susceptible d'être mis sous forme de brins, avant l'opèration de formation des brins.

Suivant le procèdé, pour fabriquer les produits alimentaires à base d'avoine sous forme de brins selon l'invention, on soumet les particules d'avoine à une opèration de cuisson sous pression en au moins deux phases afin d'éliminer au moins presque toute la blancheur des particules d'avoine, on refroidit les particules cuites et on les sèche en surface pour obtenir des particules discrètes, individuelles, ou non reliées entre elles et s'écoulant librement, on forme l'avoine sèchée superficiellement en brins, on forme des morceaux du produit tels que des biscuits, et on les fait cuire.

Les particules d'avoine(qui seront également désignées par "avoine") qui sont soumises à l'opèration de cuisson en plusieurs phases selon l'invention sont de préférence des gruaux d'avoines complètes. On peut utiliser des gruaux d'avoines complètes traités ou non à la vapeur, disponibles dans le commerce. Les avoines traitées à la vapeur sont préférées en raison du fait que ce traitement diminue l'activité enzymatique, ce qui augmente la durée de conservation en magasin de la matière brute. Un traitement par chocs des gruaux d'avoine complète tend à augmenter l'extraction des gommes et des amidons lors de la cuisson, ce qui augmente le caractère collant et n'est par conséquent pas souhaitable. Des avoines finement moulues ou moulues à l'acier, disponibles dans le commerce ne sont pas souhaitables en raison du fait qu'elles tendent à devenir trop collantes à la suite de la cuisson. Cependant d'autres produits d'avoine sous forme de boulettes ayant approximativement la dimension de gruaux d'avoine non cuits, tels que des avoines en boulettes, moulues ou moulues à l'acier sont appropriés. La mise sous forme de boulettes peut être effectuée au moyen d'un appareillage classique. Cependantla mise sous forme de boulettes ajoute des opérations, ce qui rend les boulettes plus coûteuses à utiliser que les gruaux d'avoine complète.

La quantité d'eau utilisée dans chaque phase de cuisson sous pression et la durée et la température de la cuisson doivent assurer une migration suffisante de l'eau dans les particules d'avoine pour les gélatiniser. Cependant ces parametres doivent être limités afin d'empêcher une migration vers l'extérieur ou une extraction importantes des amidons et des gommes solubles dans l'eau. Des quantétés plus élevées d'eau sont utilisées dans la seconde phase de cuisson sous pression et dans toutes les phases subséquentes afin de supprimer la blancheur dans les particules d'avoine. Une extraction ou une migration importantes des amidons et des gommes solubles dans l'eau est cependant encore évitée dans la seconde phase et les phases consécutives. On pense que dans la première phase la gélatinisation se produit de façon prédominante dans la couche externe de la particule d'avoine. Cette couche externe gélatinisée forme alors une barrière qui s'oppose plus à la migration des gommes et des amidons solubles dans l'eau vers l'extérieur qu'à la migration de l'eau vers l'intérieur pour une nouvelle gélatinisation de l'amidon dans les couches internes.

Dans la première phase de l'opération de cuisson les avoines sont cuites sous pression afin d'obtenir dans les particules d'avoine une teneur en humidité qui est dans la plage générale d'environ 15 à 25% en poids, et de préférence d'environ 20% en poids, sur la base du poids des particules d'avoine à la fin de la phase de cuisson. Ces plages de pourcentages en poids tiennent ainsi compte de la teneur initiale en humidité des particules d'avoine et de la quantité d'eau qui est absorbée ou qui migre dans les particules d'avoine pendant la cuisson. Les gruaux d'avoine complète disponibles dans le commerce ont de façon caractéristique une teneur en humidité d'environ 10 à 12% en poids. La quantité d'eau qui est ajoutée dans l'appareil de cuisson de la première phase pour cuire les particules d'avoine est limitée de façon à obtenir la plage ci-dessus de teneur en humidité d'environ 15 à 25% en poids, et de préférence d'environ 20% en poids, en supposant que la totalité de l'eau qui est ajoutée est absorbée par les particules d'avoine. Habituellement la plupart de l'eau est amenée à l'appareil de cuisson sous forme d'eau chaude. La partie restante de cette eau, qui est de façon caractéristique inférieure à environ 5% en poids, est produite par condensation d'une partie de la vapeur amenée à l'appareil de cuisson. Si on utilise des quantités d'eau plus grandes, les gommes tendent à être extraites de façon excessive vers la surface et empêchent apparemment un transfert suffisant de l'eau vers le centre des avoines pour permettre la cuisson des parties intérieures des particules d'avoine.

La pression manométrique de vapeur dans la première phase de la cuisson doit de façon caractéristique être comprise entre environ 68,9 kPa et environ 172,3 kPa; et de préférence d'environ 103,4 kPa à environ 138 kPa. La vapeur fournie dans la première phase de cuisson peut être surchauffée ou presque saturée de façon à diminuer la condensation de vapeur, ce qui a pour résultat une meilleure commande du pourcentage en poids de l'eau utilisée pour cuire les particules d'avoine. La température dans l'appareil de cuisson pendant la première phase de cette cuisson doit être comprise dans une plage d'environ 115 à 127°C, et de préférence d'environ 121 à 127°C. A des températures supérieures à environ 127°C les avoines tendent à être trop détrempées et collantes et tendent à produire des brins de mauvaise qualité. A des températures inférieures à environ 115°C les avoines sont plus sèches mais il en résulte des points blancs et des brins plus faibles. Le temps de cuisson dans la première phase doit être compris dans une plage d'environ 10 à environ 25 minutes, et de préférence d'environ 15 à 20 minutes. Si on utilise des temps de cuisson plus courts, la résistance des brins se dégrade. Des temps de cuisson plus longs ont pour résultat d'extraire plus les gommes et le produit cuit tend à être excessivement collant, les avoines cuites présentant une diminution de leur capacité d'écoulement et des points blancs apparaissant dans le produit. Dans la première phase de cuisson sous pression, environ 15 à 33% en poids de l'amidon et de façon préférée d'environ 17% à 25% en poids d'amidon sont gélatinisés à la fin de la première phase. Une continuation de la gélatinisation dans cette phase tend à produire des brins de faible résistance.

Le pourcentage en poids d'amidon qui est gélatinisé, ou le degré de la gélatinisation est déterminé par voie spectrophotométrique. On mesure tout d'abord l'amidon gélatinisé et on mesure ensuite l'amidon total. Le processus est le suivant:

A- Amidon gélatinisé: 2,00 g d'avoine cuite sont mis sous forme de brins sur un cylindre de laminage et sont ensuite mélangés avec 95 ml $H_2O$ et 5 ml de 1N NaOH dans un vase Osterizer à grande vitesse pendant trois minutes. Le mélange est ensuite transféré dans un flacon gradué de 200 ml et on ajoute de l'eau jusqu'à la graduation 200 ml. Le mélange est ensuite centrifugé à 3.000 t/m pendant 10 minutes. On prélève au moyen d'une pipette une partie aliquote de 2 ml du liquide surnageant et on la dépose dans un becher contenant 15 ml d'eau et 0,45 ml de 1N NaOH. Le pH est ajusté à 7,0 $\pm$ 0,5 par addition goutte à goutte de 0,1 N HCL ou 0,1 N NaOH suivant le besoin. La solution résultante est ensuite transférée dans un flacon gradué de 100 ml, et l'on y ajoute ensuite 1 ml d'un réactif à base d'iode. Le réactif à base d'iode contient une partie d'iode ($I_2$) pour quatre parties de KI en poids. L'addition de réactif iodé fait virer la solution au bleu. On ajoute de l'eau à la solution pour amener le volume jusqu'à la graduation 100 ml. Après cinq minutes on mesure l'absorbance de la solution à 600 nm au moyen d'un spectrophotometre.

B- Amidon total: une autre quantité de 2,00 g de l'avoine cuite est mise sous forme de brins sur un cylindre de laminage et mélangée d'abord avec 50 ml d'eau bouillante à grande vitesse pendant trois minutes. Le mélange est ensuite refroidi jusqu'à la température ambiante. On ajoute ensuite 50 ml de 1N NaOh au mélange refroidi et on mélange ensuite doucement pendant cinq minutes. Le mélange est transféré dans un flacon gradué de 200 ml et est dilué avec de l'eau jusqu'à la graduation 200 ml. Le mélange est centrifugé et de nouveau traité comme dans la phase A excepté que l'on n'ajoute pas les 0,45 ml de NaOH.

Le degré de gélatinisation est l'absorbance mesurée dans la phase A divisée par l'absorbance mesurée dans la phase B multipliée par 100.

Dans la seconde phase de cuisson, le pourcentage d'eau en poids est supérieur au pourcentage en poids de l'eau utilisée dans la première phase de cuisson. Ayant effectué la conversion d'une partie importante de l'intérieur blanc des gruaux d'avoine, par exemple jusqu'à une légère couleur tan dans la première phase, une nouvelle gélatinisation de l'amidon est effectuée dans la seconde phase pour éliminer au moins presque la totalité des parties blanches dans les particules d'avoine. A la fin de la seconde phase environ 37% à 50% en poids de l'amidon se trouve généralement gélatinisé. Des degrés supérieurs de gélatinisation tendraient également dans ce cas à donner des brins plus faibles.

La quantité d'eau ajoutée dans la seconde phase doit être limitée afin d'obtenir une teneur en humidité d'environ 40% à environ 50% en poids, sur la base du poids des particules d'avoine à la fin de la seconde phase de l'opération de cuisson, en supposant que la totalité de l'eau qui est ajoutée est absorbée ou migre dans les particules d'avoine. Habituellement la plus grande partie de l'eau ajoutée est de l'eau chaude. La partie restante de cette eau, qui est de façon caractéristique inférieure à environ 5% en poids, est produite par la condensation d'une partie de la vapeur amenée à l'appareil de cuisson. Si des quantités d'eau supérieures sont utilisées l'extérieur de l'avoine tend alors à devenir excessivement collant , gênant ainsi un transport consécutif de l'avoine cuite dans l'appareillage servant à former les brins et à travers cet appareillage.

Dans chaque phase de cuisson la température de l'eau qui est ajoutée doit de préférence être relativement élevée afin de réduire le temps de chauffage et d'éviter un refroidissement excessif de l'avoine. Avant le commencement d'une phase quelconque de cuisson, l'eau qui est ajoutée peut avoir par exemple une température d'environ 10°C à environ 77.°C. Pour l'eau des températures d'environ 65°C à environ 88°C sont appropriées dans les opérations consécutives de cuisson. L'addition d'eau doit être effectuée aussi rapidement que possible afin d'éviter une extraction excessive des amidons et des gommes solubles dans l'eau qui tend à se produire dans des conditions de pressions atmosphérique. Il est préférable d'ajouter la totalité de l'eau dans une phase consécutive de cuisson dans un temps d'environ trois minutes. Ceci peut être effectué au moyen d'une pompe, de préférence sans perte de pression du récipient de cuisson.

La pression manométrique de la vapeur utilisée dans la seconde phase doit également être comprise entre environ 68,9 kPa et environ 172,3 kPa, et de préférence de 103,4 kPa à environ 138 kPa. Comme dans la première phase de la cuisson, la vapeur est de préférence amenée sous la forme surchauffée ou presque saturée. La température de cuisson doit également être comprise dans la plage d'environ 115°C à 127°C, et de préférence d'environ 121°C à environ 127°C, pendant environ 25 minutes en descendant jusqu'à environ 10 minutes, et de préférence d'environ 20 minutes à 15 minutes.

Les deux phases de cuisson peuvent être effectuées dans le même récipient de cuisson ou dans des résipients utilisés en série. La première solution est préférable en raison du fait qu'elle nécessite moins de manutention de l'avoine. A la fin de la première phase de la cuisson on ajoute de l'eau fraiche à l'appareil de cuisson pour augmenter la teneur en eau jusqu'à la plage précitée et on commence la seconde phase de la cuisson. On doit maintenir le delai qui s'écoule entre la première phase et la seconde phase de la cuisson à un minimum non seulement afin de diminuer les temps, mais également afin d'éviter une imprégnation inutile.

Si les avoines sont imprégnées avant la formation des brins, la résistance de ceux-ci diminue avec l'augmentation des temps d'imprégnation. On ne peut pas obtenir des brins continus suffisamment résistants pour être traités facilement dans les cylindres de laminage si on utilise des temps d'imprégnation supérieurs à environ quatre heures. Ceci est surprenant en raison du fait qu'il a été nécessaire d'imprégner du blé pendant des temps plus longs afin d'obtenir des brins appropriés. Dans la fabrication d'avoine en brins suivant le procédé de l'invention, il est préférable de ne pas effectuer d'imprégnation avant la mise sous forme de brins pour permettre un processus continu et afin d'augmenter la résistance des brins. Cependant si on utilise une imprégnation celle-ci est effectuée en limitant le temps d'imprégnation à environ moins de quatre heures.

Il est préférable d'effectuer une opération de cuisson en deux phases plutôt que trois ou plus de trois opérations de cuisson en raison du fait que ceci nécessite moins de manutention de la matière. L'une ou l'autre des deux phases de cuisson décrites ci-dessus peuvent être effectuées chacune en plus d'une fois afin d'empêcher l'extraction importante des gommes et des amidons solubles dans l'eau et d'empêcher la formation sur les particules d'avoine d'une barrière s'opposant à la pénétration de l'eau. Les temps de cuisson, les températures, les pressions de vapeur et les quantités d'eau utilisées dans des phases quelconques supplémentaires doivent dans leur ensemble être comprises dans les plages précitées.

La cuisson sous pression en une seule phase par addition continue d'eau pendant la cuisson nécessiterait une addition d'eau dans l'avoine commandée de manière que le taux d'absorption de l'eau par l'avoine n'ait pas pour résultat une extraction excessive des gommes et des amidons solubles dans l'eau. Bien que l'on puisse utiliser une opération de cuisson en une seule phase ceci est moins préférable qu'une opération de cuisson sous pression en plusieurs phases en raison de la difficulté de commander l'addition d'eau. Tout d'abord la courbe d'absorption d'humidité de l'avoine peut varier de façon notable d'un lot à un autre. En outre, l'addition de l'eau sur une base continue tend à provoquer une condensation de la vapeur d'une façon à peu près imprévisible qui rend difficile une commande précise de la quantité totale d'humidité absorbée par les particules d'avoine. De même la commande continue de l'addition d'eau dans un récipient sous pression entrainerait des frais plus élevés d'appareillage.

Après la cuisson les particules d'avoine sont refroidies et séchées superficiellement pour arrêter une continuation de la cuisson des particules et pour produire des particules d'avoine individuelles non reliées entre-elles et s'écoulant librement. La surface non collante produite sur les particules d'avoine permet un déplacement de ces particules cuites à travers l'appareillage de manutention, par exemple les transporteurs à vis, les trémies et les tubes d'écoulement. Les températures appropriées auxquelles les particules d'avoine sont refroidies sont comprises dans une plage d'environ 10°C à environ 27°C, et de préférence d'environ 15°C à environ 21°C. Le refroidissement et le séchage superficiel doivent de façon caractéristique être effectués dans un temps d'environ 5 à 10 minutes. Le refroidissement et le séchage superficiel sont de préférence effectués simultanément. Environ un pourcent à quatre pourcent d'humidité sur la base du poids de l'avoine cuite humide doivent être extraits lors du séchage superficiel.

Après l'enlèvement de l'appareil de cuisson, les particules d'avoine présentent une très grande liberté d'écoulement, mais le refroidissement et le séchage superficiel diminuent encore les propriétés gluantes jusqu'au point où au moins la plus grande partie des particules d'avoine sont séparées et s'écoulent individuellement dans une trémie sans présenter d'effet de voute. Le refroidissement et le séchage superficiel doivent être effectués aussi rapidement que possible, de préférence dans un temps d'environ 5 minutes et de façon encore plus préférable dans un temps d'environ 2 minutes après la seconde phase de cuisson afin de diminuer le caractère collant. De même, suivant les conditions de l'ambiance, en particulier de température et d'humidité, le refroidissement et/ou le séchage superficiel peuvent être effectués de façon avantageuse sur la totalité du transport des particules d'avoine jusqu'. aux cylindres de laminage, ou en d'autres points .. Dans des conditions de chaleur et d'humidité élevées, l'humidité tend à se rassembler sur les particules d'avoine, ce qui pourrait augmenter le caractère collant.

L'opération de refroidissement et de séchage superficiel simultanés est de préférence effectuée en utilisant l'air ambiant. On peut également cependant utiliser d'autres procédés de refroidissement et/ou de séchage superficiel tels que la réfrigération, le refroidissement sous vide ou des combinaisons de ces procédés.

Afin d'obtenir des propriétés optimales de facilités de mise en forme de brins, la teneur en humidité des particules d'avoine cuite, refroidie et séchée superficiellement doit être d'environ 39% à environ 43% et de préférence d'environ 40% à environ 42% en poids sur la base du poids des particules d'avoine. Ces teneurs en humidité peuvent être obtenues dans l'opération de refroidissement et de séchage superficiel ou par un séchage supplémentaire. D'une façon caractéristique, le séchage supplémentaire peut être effectué à des températures comprises dans la plage d'environ 15°C à environ 38°C, d'environ 10 minutes jusqu'à environ 5 minutes. Pour des teneurs en humidité inférieures à environ 28 %, la facilité de mise en forme de brins des particules d'avoine se détériore rapidement. Les particules tendent à se désagréger ou encore les brins qui sont formés présentent une faible résistance, gênant ainsi la formation de couches de longs brins continus sur un cylindre de laminage. Des teneurs en humidité d'environ 28% à environ 49% sur la base du poids des particules d'avoine sont appropriées pour la formation de brins sur des cylindres de laminage.

Les particules d'avoine séchées sont ensuite transférées de façon appropriée au moyen de transporteurs à courroies jusqu'à une trémie qui alimente un transporteur à vis. Ce dernier transfère les particules d'avoine à une série de cylindres de laminage classiques ou de laminoirs par l'intermédiaire de tubes d'écoulement ou de trémies. Les brins qui peuvent être produits sous la forme de feuilles analogues à des filets par chaque jeu de cylindres de laminage sont déposés en couches, coupés, séchés, cuits, grillés et ensuite les morceux sont emballés d'une façon connue, comme dans la fabrication des biscuits de blé complet sous forme de brins. Ces feuilles disposées en couches peuvent être coupées afin de former des biscuits rectangulaires ayant la dimension d'une cuillère, ou d'autres formes caractéristiques des " céréales " prêtes à consommer pour le petit déjeuner, des biscuits ou des biscuits secs. Les courbes de température utilisées dans le four pour le séchage, la cuisson et pour griller l'avoine peuvent d'une façon générale être les mêmes que celles utilisées pour la fabrication de biscuits de blé en brins. Une courbe de température appropriée s'échelonne d'environ

315°C à l'entrée du four jusqu'à environ 65°C à la sortie de celui-ci. Le temps total pour le séchage, la cuisson et faire griller les particules s'échelonne d'environ 6 minutes à environ 8 minutes.

On peut utiliser pour la mise en oeuvre de l'invention des appareillages de traitement disponibles dans le commerce. L'appareil de cuisson sous pression doit être du type dans lequel on peut faire passer de la vapeur en contact direct avec l'avoine, et dans lequel la vapeur peut être extraite tandis que le récipient est agité et/ou entrainé en rotation. Des appareils de cuisson sous pression appropriés pouvant être utilisés dans la première et la seconde phase de la cuisson comprennent les cuiseurs Lauhoff, Buhler ou Baker Perkins. Pour acheminer le produit cuit après qu'il ait été retiré du second étage de l'appareil de cuisson sous pression, on peut utiliser un transporteur à secousses, tel qu'un transporteur du type "Rexnord". Un appareillage d'imprégnation approprié comprend des courroies planes ou des bacs.

Avant le refroidissement du produit cuit, il est préférable de le soumettre à une opération destinée à briser les grumeaux dans un appareil rotatif tel qu'un appareil Jacobsen pour briser les grumeaux. Les avoines cuites sont de préférence refroidies et simultanément séchées superficiellement sur un rouleau de refroidissement tel que celui fabriqué par la firme Littleford, dans un séchoir à grains du type Hess, dans un refroidisseur à tamis vibrant, dans un refroidisseur continu "Wolverine" ou dans des combinaisons de ces appareils. Dans le refroidisseur " Wolverine", des jets d'air froid frappent l'avoine entrainée en vibrations, provenant d'au-dessus de celle-ci, afin de fluidiser les particules et ainsi les refroidir et les sécher superficiellement. D'autres dispositifs appropriés de refroidissement comprennent des cuves à dépression et des transporteurs réfrigérés.

Des exemples des types de séchoirs qui peuvent être utilisés pour sécher de façon supplémentaire l'avoine refroidie séchée superficiellement sont des séchoirs à courroie ou à transporteur, des séchoirs à dépression et analogues.

Des dispositifs de formation de brins qui peuvent être utilisés dans la mise en oeuvre du procédé suivant l'invention peuvent comprendre des dispositifs classiques à cylindres et des dispositifs tels que ceux mentionnés dans les brevets U.S. N° 502.378, 2.008.024, 2.013.003, 4.004.035 et dans le brevet Canadien N° 674.046. Un laminoir classique pouvant être utilisé dans lamise en oeuvre du procédé suivant l'invention comprend deux cylindres étroitement rapprochés qui tournent dans des sens opposés, avec au moins l'un des cylindres comportant des gorges circonférentielles. Après être passée  entre les cylindre, le produit est déformé en longs cordons ou brins individuels, le cylindre comportant des gorges circonférentielles peut également comporter des gorges transversales aux gorges circonférentielles pour former des feuilles analogues à des filets. Lorsque les cylindres sont maintenus de façon à tourner en contact mutuel, les brins ou les filaments sont nettement espacés les uns des autres bien que se trouvant plus ou moins en contact ensemble, mais lorsque les cylindres sont légèrement écartés, sous pression, les filaments adjacents peuvent être réunis les uns aux autres par des âmes ou voiles très fins translucides et presque transparents.

Les appareils de laminage sont de façon caractéristique agencés suivant une série linéaire le long d'un transporteur commun, les brins passant longitudinalement ou parallèlement au sens de déplacement du transporteur. Les feuilles ou les couches de filaments sont déposées superposées sur le transporteur, avec les filaments s'étendant dans le même sens. Un biscuit typique peut contenir par exemple jusqu'à 21 couches individuelles de brins. Après avoir obtenu l'épaisseur désirée, la bande à couches multiples peut être coupée transversalement et longitudinalement de façon connue pour former de multiples rangées de biscuits. La coupe peut être effectuée à travers le feuilleté pour donner leur forme aux biscuits individuels, avant la cuisson. Une coupe partiellement en travers du feuilleté afin de réaliser des formes de biscuits, suivie par la cuisson, et la séparation du feuilleté cuit partiellement coupé en biscuits individuels de façon connue est préférable pour un contrôle plus facile de l'orientation du produit coupé lorsque celui-ci traverse le four de cuisson.

Des fours appropriés pour le séchage, la cuisson et pour griller le produit sous forme de brins comprennent les fours des firmes Proctor et Schwartz, Werner Lahara et Spooner, comportant des brûleurs à gaz et un circuit d'air forcé, et un transporteur.

De nombreux grains nécessitent des temps de cuisson différents, des temps d'imprégnation différents et des températures différentes pour obtenir les propriétés optimales d'écoulement, de résistance des brins, d'aspect, et autres, En conséquence pour fabriquer un produit à base de céréales comprenant un mélange de différents types de grains de céréales dans chaque biscuit, il est préférable de traiter séparément chaque type de grain et les former conjointement en brins. Il est également possible de combiner les grains séparés en les formant séparément en brins et en déposant en couches les brins formés des différents grains.

Les autres grains peuvent être préparés pour être formés en brins par des procédés classiques ou par le procédé suivant l'invention. Des exemples des autres grains sont l'orge, le seigle, le maïs, le blé, leurs combinaisons et autres. On a trouvé que l'utilisation de l'opération de cuisson sous pression à plusieurs phases suivant la présente invention élimine la nécessité de l'imprégnation de ces grains ou réduit cette imprégnation. Les pressions de vapeur, les temps de cuisson et les températures, les conditions de refroidissement, de séchage et les conditions dans lesquelles le produit est cuit peuvent généralement être les mêmes que celles décrites ci-dessus pour la fabrication de l'avoine en brins. Cependant des réglages peuvent être effectués pour obtenir les propriétés optimales d'écoulement et de formation de brins au moyen de légères variations de la teneur en humidité, de la pression de vapeur et du temps de cuisson.

L'avoine peut être cuite avec un ou plusieurs ingrédients alimentaires dans les proportions habituelles de concentration, qui ne relient pas entre-elles les particules d'avoine ou n'interfèrent pas d'une autre façon avec l'obtention de particules d'avoine discrètes s'écoulant librement, pour la production de brins en continu. Ainsi par exemple l'avoine peut être cuite avec un sucre tel que du sucrose, du sel, du malt, de l'assaisonnement, des colorants, un émulsifiant tel que le "Myvatex" (un mélange de monoglycérides distillés fabriqué par Eastman Kodak), des vitamines et/ou des minéraux. Cependant les produits fabriqués seulement à partir de gruaux d'avoine complète et/ou seulement d'autres grains sont préférables du fait de leur attrait en tant que produits 100% naturels.

La présente invention est encore illustrée par les exemples suivants. Tous les pourcentages, les parties et les proportions sont indiqués en poids et toutes les températures en degrésC à moins d'autres indications.

### Exemple I

Dans cet exemple les deux phases de l'opération de cuisson sont conduites dans le même appareil de cuisson sous pression. On ajoute dans un cuiseur Johnson 454 kg de gruau d'avoine complète (distribué dans le commerce par la firme Con Agra) ayant une teneur en humidité d'environ 10% en poids (O'Haus). On ajoute ensuite dans le cuiseur 59 litres d'eau à une température d'environ 13°C. Le cuiseur est fermé et on fait passer de la vapeur saturée à 100% sous une pression manométrique de 103,4 kPa dans l'appareil de cuisson en contact direct avec l'avoine pendant 15 minutes. On coupe la vapeur et on ouvre l'appareil de cuisson pour lui ajouter 192, 5 litres d'eau. L'eau qui a été ajoutée était à une température de 65,5 à 77°C. Toute l'eau a été ajoutée en moins de trois minutes. L'appareil de cuisson a été ensuite fermé et on a introduit de la vapeur saturée à 100% sous une pression manométrique de 103,4 kPa pendant 15 minutes supplémentaires comme dans la première phase. On a ensuite coupé la vapeur et ouvert l'appareil. L'avoine cuite a été déchargée dans un transporteur à secousses, on l'a fait passer à travers deux appareils pour briser les blocs et l'a ensuite amenée à un cylindre de refroidissement du type Littleford. Le refroidissement, accompagné par un séchage superficiel a été effectué de façon à diminuer la température de l'avoine jusqu'à environ 32°C.

Le produit déchargé du cylindre de refroidissement et de séchage a été recueilli dans un bac de séchage équipé de son propre ventilateur et ayant un fond perforé formant tamis. La température de l'air utilisé pour continuer le refroidissement et le séchage superficiel du produit était à une température d'environ 21°C. Le séchage a été effectué pendant environ cinq minutes pour obtenir un produit ayant une température d'environ 27°C et une teneur en humidité d'environ 42% en poids. Le produit séché a été transporté à une trémie d'une installation de laminage et laminé dans un laminoir classique ayant un transporteur à chaîne de 12,7 cm. On a obtenu une couche de brins d'une largeur d'environ 11,2 cm à 12,7 cm. Un feuilleté de trois couches est formé et coupé pour obtenir des morceaux ayant la dimension d'une cuillère. Ces morceaux ont été ensuite cuits dans un four Spooner pendant environ sept minutes à une température d'environ 315°C pour produire des biscuits à 100% d'avoine complète, cuits, et ayant la dimension d'une cuillère et présentant une teneur en humidité d'environ 5% sur la base du poids du biscuit final obtenu.

La qualité des brins était résistante et la configuration de la couche de brins était la même que la configuration des brins de blé.

Exemple II

Cet exemple est effectué d'une façon analogue à l'exemple 1, excepté que l'avoine cuite à été amenée à un refroidisseur continu "Wolverine" au lieu du cylilndre de refroidissement Littleford et de la cuve de séchage. Les particules d'avoine sont refroidies et séchées superficiellement jusqu'à une température d'environ 27°C et une teneur en humidité d'environ 42% en poids respectivement au moyen du refroidisseur continu. La qualité des brins et leur configuration sont les mêmes que celles obtenues dans l'exemple 1.

REVENDICATIONS

1- Procédé pour fabriquer un produit alimentaire à base d'avoine, sous forme de brins, à peu près dépourvu de rayures blanches, caractérisé en ce que: (a) on fait cuire des particules d'avoine sous pression en au moins deux phases, la quantité d'eau dans chaque phase étant limitée afin d'éviter l'extraction notable de la gomme d'avoine et des amidons solubles dans l'eau jusqu'à la surface des particules d'avoine, (b) on refroidit et on sèche superficiellement les particules d'avoine cuites pour produire des particules d'avoine pouvant s'écouler librement individuellement, et (c) on forme les particules d'avoine refroidies et séchée superficiellement en brins.

2- Procédé suivant la revendication 1, caractérisé en ce que l'opération de cuisson sous pression est effectuée en deux phases.

3- Procédé suivant la revendication 2, caractérisé en ce que la quantité d'eau ajoutée dans la première phase est limitée afin d'obtenir une teneur en humidité des particules d'avoine comprise dans une plage d'environ 15% à 25% en poids, sur la base du poids des particules d'avoine à la fin de la première phase.

4- Procédé suivant la revendication 1, caractérisé en ce que les particules d'avoine amenées à l'appareil de cuisson de la première phase sont constituées par du gruau d'avoine complète.

5- Procédé suivant la revendication 1, caractérisé en ce que ledit produit alimentaire consiste essentiellement en avoine sous forme de brins.

6- Procédé suivant la revendication 1, caractérisé en ce que ledit produit alimentaire est constitué par de l'avoine sous forme de brins et au moins un autre grain également sous forme de brins.

7- Procédé suivant la revendication 2, caractérisé en ce que l'opération de cuisson sous pression est conduite sous une pression manométrique de vapeur comprise dans une plage d'environ 68,9 kPa à environ 172,3 kPa.

8- Procédé suivant la revendication 2, caractérisé en ce que la quantité d'eau ajoutée dans la seconde phase de cuisson sous pression est limitée afin d'obtenir une teneur en humidité comprise dans une plage d'environ 40% à environ 50% basés sur le poids des particules d'avoine à la fin de la seconde phase de cuisson.

9- Procédé suivant la revendication 2, caractérisé en ce que la cuisson sous pression est effectuée à une température comprise dans une plage d'environ 115°C à environ 126°C.

10- Procédé suivant la revendication 2, caractérisé en ce que les particules d'avoine obtenues dans la phase (b) sont en outre séchées jusqu'à une teneur en humidité comprise dans la plage d'environ 39% à 43% basés sur le poids des particules d'avoine.

11- Procédé suivant la revendication 2, caractérisé en ce que les particules d'avoine refroidies et séchées superficiellement ont une teneur en humidité d'environ 28% à environ 49% basés sur le poids des particules d'avoine.

12- Procédé suivant la revendication 2, caractérisé en ce que les particules d'avoine refroidies séchées superficiellement sont immédiatement formées en brins afin d'éviter une imprégnation.

13- Procédé suivant la revendication 1, caractérisé en ce que ledit refroidissement est effectué à une température comprise dans une plage d'environ 10°C à environ 27°C.

14- Procédé suivant la revendication 13, caractérisé en ce que ledit refroidissement et ledit séchage superficiel sont effectués dans un temps d'environ cinq minutes à environ dix minutes.

15- Procédé suivant la revendication 6, caractérisé en ce que l'autre grain utilisé est de l'orge, du seigle, du blé, du maïs ou des mélanges de ceux-ci.

16- Procédé suivant la revendication 5, caractérisé en ce que ledit produit alimentaire est un produit à base de céréales, prêt à consommer, sous la forme de biscuits constitués de brins.

17- Produit à base d'avoine sous forme de brins, caractérisé en ce qu'il est obtenu au moyen du procédé tel que défini suivant la revendication 1.

18- Produit à base d'avoine sous forme de brins, caractérisé en ce qu'il est obtenu au moyen du procédé tel que défini suivant la revendication 4.

19- Produit à base d'avoine sous forme de brins, caractérisé en ce qu'il est obtenu au moyen du procédé tel que défini suivant la revendication 16.

20- Produit à base d'avoine sous forme de brins, caractérisé en ce qu'il est obtenu au moyen du procédé tel que défini suivant la revendication 6.

21- Procédé pour fabriquer un produit à base de céréales, prêt à consommer, sous forme de brins, à peu près dépourvu de rayures blanches, caractérisé en ce que: (a) on fait cuire les grains de céréales sous pression en au moins deux phases, la quantité d'eau dans chaque phase étant limitée de façon à éviter une extraction notable des gommes et des amidons solubles dans l'eau vers la surface des grains de céréales, la quantité d'eau dans la première phase étant suffisante pour gélatiniser partiellement l'amidon des grains de céréales, et la quantité d'eau dans les phases restantes étant suffisante pour éliminer à peu près la totalité des parties blanches dans les grains de céréales, (b) on refroidit et on sèche superficiellement les grains de céréales cuits afin de produire des grains de céréales discrets, libres de s'écouler individuellement, (c) on forme en brins les grains de céréales refroidis et séchés superficiellement, (d) on dépose les grains de céréales sous forme de brins en couches, (e) on coupe le produit formé de couches et (f) on fait cuire le produit coupé.

22- Procédé suivant la revendication 21, caractérisé en ce que le produit déposé en couches est coupé partiellement en morceaux avant une cuisson et les morceaux partiellement coupés sont séparés après la cuisson.

23- Procédé pour fabriquer un produit alimentaire prêt à consommer, à base d'avoine, sous forme de brins, à peuprès dépourvu de rayures blanches, caractérisé en ce que : (a) on fait cuire sous pression un gruau d'avoine en présence d'eau et de vapeur, la quantité d'eau étant limitée pendant la cuisson des gruaux d'avoine de façon à éviter une extraction notable des gommes et des amidons solubles dans l'eau vers la surface des gruaux d'avoine complète, (b) on refroidit et on sèche superficiellement les gruaux d'avoine cuits pour produire des gruaux d'avoine discrets libres de s'écouler individuellement, (c) on for- les gruaux d'avoine cuits et séchés superficiellement en brins, (d) on dépose les brins en couches, (e) on coupe le produit feuilleté et, (f) on fait cuire le produit coupé.

24- Procédé suivant la revendication 23, caractérisé en ce que la quantité d'eau est suffisante pour obtenir une teneur en humidité des gruaux d'avoine cuits d'environ 40% à environ 50% en poids.

25-Procédé suivant la revendication 23, caractérisé en ce que la cuisson sous pression est effectuée en deux phases, la quantité d'eau dans la première phase étant suffisante pour gélatiniser partiellement l'amidon du gruau d'avoine, et la quantité d'eau dans la seconde phase étant suffisante pour éliminer au moins presque toutes les parties blanches dans le gruau d'avoine.